# EUROPÄISCHE PATENTSCHRIFT

(11) **EP 0 631 983 B1**
(45) Veröffentlichungstag und Bekanntmachung des Hinweises auf die Patenterteilung: **03.05.2000**
(21) Anmeldenummer: 94109818.8
(22) Anmeldetag: 24.06.1994
(51) Int. Cl.: C01B 39/08, C01B 39/46, C01B 39/00, C01B 39/06, B01J 29/89, B01J 29/04

(54) **Kristalline Oxide des Titans**
Crystalline titanium oxides
Oxydes cristallins du titane

(30) Priorität: 02.07.1993 DE 4322022
(43) Veröffentlichungstag der Anmeldung: 04.01.1995
(73) Patentinhaber: BASF Aktiengesellschaft, 67063 Ludwigshafen (DE)
(72) Erfinder: Mueller, Ulrich, Dr., D-67434 Neustadt (DE); Hoelderich, Wolfgang, Prof. Dr., D-67227 Frankenthal (DE)

(56) Entgegenhaltungen:
- EP-A- 0 251 589
- WO-A-85/04853
- US-A- 5 015 453
- CHEMICAL ABSTRACTS, vol. 104, no. 2, 13. Januar 1986, Columbus, Ohio, US; abstract no. 7808u, Seite 117 ; & JP-A-60 127 217 (JAPAN SYNTHETIC RUBBER CO., LTD.) 6. Juli 1985

## Beschreibung

Die vorliegende Erfindung betrifft neue kristalline Oxide des Titans als Mischoxide mit den Elementen Silicium, Germanium, Cer oder Aluminium in bestimmten Atomverhältnissen.

Aus der US-A-4 410 501 ist eine spezielle Form kristalliner titanhaltiger Oxide, die Titansilikalite mit einem definierten mikroporösen SiO₂-TiO₂-Kristallgitter mit einem Titan zu Siliciumverhältnis von 0,0005 : 1 bis 0,04 : 1 als TS-1 Zeolith bekannt. Sie sind in der Lage, mittels Wasserstoffperoxid Propen katalytisch zu Propenoxid zu oxidieren.

Aus der GB-A-20 24 790 sind zeolithähnliche Strukturen mit der allgemeinen Formel (0,0001 - 1) MₙOₘ * SiO₂, in der M = Ti, V, Mn, Fe, Co, Zn, Zr, Rh, Ag, Sn, Sb und B sein kann, bekannt.

Aus der WO-A-85/04853 sind kristalline natriumhaltige Titanosilikate der Formel (TiₓSi_{y})O₂ mit tetraedrischer Koordination bekannt.

Nach Stud. Surf. Sci. Catal., Vol. 37, Amsterdam (1987) Seite 413 bis 425, haben diese Materialien jedoch den Nachteil, daß nur Moleküle bis zu einer bestimmten Größe im Porengefüge des TS-1 umgesetzt werden können. Zudem wird für die Synthese des TS-1 mit Tetrapropylammoniumhydroxid-Lösung ein teurer Einsatzstoff verwendet. Der Gehalt an Titan im TS-1 ist äußerst gering und wird molar nur mit maximal ca. 4 bis 5 Mol-% angegeben.

Der vorliegenden Erfindung lag daher die Aufgabe zugrunde, neue Materialien zu finden, die Titan in höheren Konzentrationen enthalten, und den zuvor genannten Nachteilen abhelfen.

Demgemäß wurden neue und verbesserte kristalline Oxide des Titans der allgemeinen Formel I

[Tiₓ(m*D₁₋ₓ)(2n/3*E₁₋ₓ)]O₂ (I)

, in der D für Silicium oder Germanium, E für Cer oder Aluminium und x für 0,06 bis 0,9 steht und m = 1, wenn n = 0 oder m = 0, wenn n = 1 ist, mit der Maßgabe, daß die Oxide,
in denen D für Silicium steht, mindestens die folgenden Linien im Röntgendiffraktogramm aufweisen:

| 2 Theta | d [Å] | Relative Intensität |
|---|---|---|
| 10,8 | 8,18 | 75 bis 100% |
| 28,3 | 3,15 | 70 bis 90% |
| 47,8 | 1,90 | 40 bis 75% |

in denen D für Germanium steht, mindestens die folgenden Linien im Röntgendiffraktogramm aufweisen:

| 2 Theta | d [Å] | Relative Intensität |
|---|---|---|
| 11,39 | 7,756 | 100 bis 90 % |
| 19,80 | 4,478 | 20 bis 30 % |
| 22,91 | 3,878 | 20 bis 30 % |
| 28,16 | 3,165 | 40 bis 60 % |
| 36,62 | 2,451 | 20 bis 30 % |

in denen E für Cer steht, mindestens die folgenden Linien im Röntgendiffraktogramm aufweisen:

| 2 Theta | d [Å] | Relative Intensität |
|---|---|---|
| 11,1 | 7,96 | 15 bis 40 % |
| 24,1 | 3,68 | 15 bis 40 % |
| 28,5 | 3,12 | 80 bis 100 % |
| 33,0 | 2,71 | 40 bis 70 % |
| 43,1 | 2,09 | 15 bis 30 % |
| 47,4 | 1,91 | 80 bis 100 % |

in denen E für Aluminium steht, mindestens die folgenden Linien im Röntgendiffraktogramm aufweisen:

| 2 Theta | d [Å] | Relative Intensität |
|---|---|---|
| 9,92 | 8,90 | 5 bis 10 % |
| 14,37 | 6,15 | 40 bis 60 % |
| 19,41 | 4,56 | 15 bis 30 % |
| 28,09 | 3,17 | 100 bis 80 % |
| 39,88 | 2,25 | 10 bis 20 % |

gefunden, die bevorzugt hydrothermal, z.B. durch Kristallisation von Titanalkoholate (RO)₄-Ti, in der R C₁- bis C₂₀-Alkyl bedeutet, mit Silicium-, Germanium-, Cer- oder Aluminiumverbindungen in wässrigem Medium bei Temperaturen von 50 bis 300°C und Drücken von 1 bis 50 bar, gegebenenfalls in Gegenwart von Aminen oder organischen Ammoniumsalzen, hergestellt werden.

Die erfindungsgemäßen kristallinen Oxide des Titans lassen sich wie folgt herstellen:
Die neuen kristallinen Titanate I, nachfolgend als Silicotitanate BST, Alumotitanate BAT, Germanotitanate BGT oder Certitanate BCT bezeichnet, kann man durch hydrothermale Umsetzung und Kristallisation von Titanalkoholaten (RO)₄-Ti und Silicium-, Aluminium-, Cer- oder Germaniumverbindungen in wässriger oder wässrig/alkoholischer Phase bei Temperaturen von 50 bis 300°C, bevorzugt 100 bis 250°C, besonders bevorzugt 150 bis 210°C in Reaktoren wie abgeschlossenen Druckbehälter bei Drücken von 1 bis 50 bar, bevorzugt 3 bis 30 bar, besonders bevorzugt bei dem durch die vorgewählte Temperatur gegebenen autogenen Druck, herstellen.

Als hilfreich hat es sich dabei erwiesen, die Hydrolyse der organischen Titansäureester (RO)₄-Ti durch den Zusatz einer Base wie Alkali- und Erdalkaliverbindungen und/oder von organischen Aminen oder organischen Ammoniumsalzen zu beschleunigen. Das Molverhältnis von der Base zum organischen Titansäureester (RO)₄-Ti beträgt in der Regel 0,001 : 1 bis 10 : 1, bevorzugt 0,005 : 1 bis 1 : 1, besonders bevorzugt 0,01 : 1 bis 0,5 : 1.

Als Silicium-, Aluminium-, Cer- oder Germaniumverbindungen eignen sich beispielsweise Oxide und Alkoxide, bevorzugt Siliciumdioxid, Germaniumdioxid, Aluminiumoxid, Ceroxid und C₁- bis C₂₀-Alkoxiverbindungen der Elemente Silicium, Aluminium, Cer oder Germanium wie Methoxi-, Ethoxi-, Isopropoxi-, Propoxi- und Butoxi-, besonders bevorzugt Ethoxi-, Propoxi- und Isopropoxiverbindungen.

Als organische Titansäureester (RO)₄-Ti eignen sich solche, in denen R C₁- bis C₂₀-Alkyl, bevorzugt C₁- bis C₈-Alkyl, besonders bevorzugt C₁- bis C₄-Alkyl wie Methyl, Ethyl, n-Propyl, iso-Propyl, n-Butyl, iso- Butyl, sec.-Butyl und tert.-Butyl bedeutet.

Typische Kristallisationszeiten liegen in der Regel im Bereich zwischen einigen 2 Stunden bis zu mehreren 10 Tagen.

Die so hergestellten erfindungsgemäßen Titanate des Si, Ge, Ce, Al können nach ihrer Isolierung, Trocknung bei 100 bis 160°C, vorzugsweise 110°C und Calcinierung bei 450 bis 550°C, vorzugsweise 500°C, mit einem Bindemittel im Verhältnis 98 : 2 bis 40 : 60 Gew.-% zu Strängen, Tabletten, Ringen, Sternen, Kugeln und anderen Formkörpern verformt werden. Als Bindemittel eignen sich verschiedene Aluminiumoxide, bevorzugt Boehmit, amorphe Aluminosilikate mit einem SiO₂/Al₂O₃-Verhältnis von 25 : 75 bis 90 : 5, bevorzugt 75 : 25, Siliciumdioxid, bevorzugt hoch-disperses SiO₂, Gemische aus hochdispersem SiO₂ und hochdispersem Al₂O₃, TiO₂, ZrO₂ sowie Ton. Nach der Verformung werden die Extrudate oder Preßlinge etc. bei 110°C/16 h getrocknet und bei 500°C/16 h calciniert.

Man erhält- auch gut geeignete Katalysatoren, wenn z.B. das isolierte erfindungsgemäße Titanat direkt nach der Trocknung verformt wird und erst nach der Verformung einer Calcinierung unterworfen wird. Die erfindungsgemäßen Titanate können auch in reiner Form, ohne Binder, als Stränge oder Tabletten eingesetzt werden, wobei als Verstrangungs- oder Peptisierungshilfsmittel z.B. Methylcellulose, Stearinsäure, Kartoffelstärke, Ameisensäure, Oxalsäure, Essigsäure, Salpetersäure, Ammoniak, Amine, Silikoester und Graphit oder deren Gemische verwendet werden.

Liegt das erfingungsgemäße Titanat aufgrund der Art seiner Herstellung z.B. in der Alkali-Form wie beispielsweise der Na-Form vor, dann kann versucht werden, diese durch Ionenaustausch z.B. mit Ammoniumionen und anschließende Calcinierung oder durch Behandlung mit Säuren vollkommen oder partiell in die gewünschte H-Form zu überführen.

Wenn bei der Anwendung der erfindungsgemäßen Materialien als Katalysatoren eine durch Koksabscheidung bedingte Desaktivierung eintritt, empfiehlt es sich, diese durch Abbrennen der Koksablagerung mit Luft oder mit einem Luft/N₂-Gemisch bei 400 bis 550°C, zu regenerieren. Aber auch Behandlungen mit H₂O₂ oder mit organischen Lösungsmitteln können zur Regenerierung herangezogen werden.

Durch partielle Verkokung (pre-coke) ist es möglich, die Aktivität der erfindinngsgemäßen Titanate als Katalysatoren für ein Selektivitätsoptimum des gewünschten Reaktionsproduktes einzustellen.

Um eine möglichst hohe Selektivität, hohen Umsatz sowie lange Standzeiten zu erreichen, ist es vorteilhaft, die erfindinngsgemäßen Titanate zu modifizieren. Eine geeignete Modifizierung besteht darin, daß man das unverformte oder verformte Titanat mit Metallsalzen durch einen Ionenaustausch oder durch Imprägnierung dotiert. Als Metalle werden Alkalimetalle wie Li, Cs, K, Erdalkalimetalle wie Mg, Ca, Sr, Metalle der 3., 4. und 5. Hauptgruppe wie Al, Ga, Ge, Sn, Pb, Bi, Übergangsmetalle der 4. bis 8. Nebengruppe wie Ti, Zr, V, Nb, Cr, Mo, W, Mn, Re, Fe, Ru, Os, Co, Rh, Sr, Ni, Pd, Pt, Übergangsmetalle der 1. und 2. Nebengruppe wie Cu, Ag, Zn, seltene Erdmetalle wie La, Ce, Pr, Nd, Fr, Yb und U eingesetzt.

Zweckmäßigerweise führt man die Dotierung so durch, daß man die verformten erfindungsgemäßen Titanate in einem Steigrohr vorlegt und bei 20 bis 100°C eine wäßrige oder ammoniakalische Lösung eines Halogenids oder eines Nitrats der voranbeschriebenen Metalle überleitet. Ein derartiger Ionenaustausch kann an der Wasserstoff-, Ammonium- und Alkaliform des Titanats vorgenommen werden. Eine weitere Möglichkeit der Metallaufbringung auf das Titanat ist gegeben, indem man das erfindungsgemäße Material z.B. mit einem Halogenid, einem Nitrat oder einem Oxid der voranbeschriebenen Metalle in wäßriger, alkoholischer oder ammonialkalischer Lösung imprägniert. Sowohl an einen Ionenaustausch als auch an eine Imprägnierung schließt sich zumindest eine Trocknung, wahlweise eine abermalige Calcinierung an.

Eine mögliche Ausführungsform besteht z.B. darin, daß man Cu(NO₃)₂ x 3 H₂O oder Ni(NO₃)₂ x 6 H₂O oder Ce(NO₃)₃ x 6 H₂O oder La(NO₃)₂ x 6 H₂O oder Cs₂CO₃ in Wasser löst. Mit dieser Lösung wird das verformte oder unverformte Titanat eine gewisse Zeit, etwa 30 Minuten, getränkt Die eventuell überstehende Lösung wird am Rotationsverdampfer von Wasser befreit. Danach wird das getränkte Titanat bei etwa 150°C getrocknet und bei etwa 550°C calciniert. Dieser Tränkvorgang kann mehrmals hintereinander vorgenommen werden, um den gewünschten Metallgehalt einzustellen.

Es ist möglich, eine wäßrige Ni(CO₃)₂-Lösung oder ammoniakalische Pd(NO₃)₂-Lösung herzustellen und darin das reine pulverförmige Titanat bei 40 bis 100°C unter Rühren etwa 24 h aufzuschlämmen. Nach Abfiltrieren, Trocknen bei etwa 150°C und Calcinierung bei etwa 500°C kann das so gewonnene Material mit oder ohne Bindemittel zu Strängen, Pellets oder Wirbelgut weiterverarbeitet werden.

Ein Ionenaustausch der in der H-Form oder Ammonium-Form oder Alkali-Form vorliegenden Titanate kann so vorgenommen werden, daß man das Titanat in Strängen oder Pellets in einer Kolonne vorlegt und darüber z.B. eine wäßrige Ni(NO₃)₂-Lösung oder ammoniakalische Pd(NO₃)₂-Lösung bei leicht erhöhter Temperatur zwischen 30 und 80°C im Kreislauf 15 bis 20 h leitet. Danach wird mit Wasser ausgewaschen, bei etwa 150°C getrocknet und bei etwa 550°C calciniert. Bei manchen metalldotierten erfindinngsgemäßen Titanaten z.B. Pd-, Cu-, Ni-dotierten Titanaten ist eine Nachbehandlung mit Wasserstoff vorteilhaft.

Eine weitere Möglichkeit der Modifizierung besteht darin, daß man das erfindungsgemäße Material - verformt oder unverformt - einer Behandlung mit Säuren wie Salzsäure, Flußsäure und Phosphorsäure und/oder Wasserdampf unterwirft. Dabei geht man vorteilhaft so vor, daß man das Titanat in Pulverform mit 1 n Phosphorsäure 1 Stunde bei 80°C behandelt. Nach der Behandlung wird mit Wasser gewaschen, bei 110°C/16 Stunden getrocknet und bei 500°C/20 Stunden calciniert. Nach einer anderen Arbeitsweise behandelt man das Titanat vor oder nach ihrer Verformung mit Bindemitteln, z.B. 1 bis 3 Stunden bei Temperaturen von 60 bis 80°C mit einer 3 bis 25 gew.-%igen, insbesondere 12 bis 20 gew.-%igen wäßrigen Salzsäure. Anschließend wird das erfindungsgemäße Titanat mit Wasser gewaschen, getrocknet und bei 400°C bis 500°C calciniert.

Eine besondere Ausführungsform für die Säurebehandlung besteht darin, daß man das erfindungsgemäße Material vor seiner Verformung bei erhöhter Temperatur mit 0,001 n bis 2 n Flußsäure, vorzugsweise 0,05 n bis 0,5 n Flußsäure behandelt, beispielsweise durch Erhitzen unter Rückfluß über einen Zeitraum von 0,5 bis 5, vorzugsweise 1 bis 3 Stunden. Nach Isolierung, durch Abfiltrieren und Auswaschen, des erfindungsgemäßen Materials wird dieses zweckmäßig, bei Temperaturen von 100 bis 160°C, getrocknet und bei Temperaturen von 450°C bis 600°C calciniert. Gemäß einer weiteren bevorzugten Ausführungsform für die Säurebehandlung wird das erfindungsgemäße Material nach einer Verformung mit Bindemittel bei erhöhter Temperatur, zweckmäßig bei 50°C bis 90°C, vorzugsweise 60°C bis 80°C, über einen Zeitraum von 0,5 bis 5, mit 12 bis 20 gew.-%iger Salzsäure, behandelt. Anschließend wird das erfindungsgemäße Material ausgewaschen und zweckmäßig, bei Temperaturen von 100 bis 160°C, getrocknet und bei Temperaturen von 450 bis 600°C calciniert. Einer HF-Behandlung kann sich auch eine HCl-Behandlung anschließen.

Die hier beschriebenen Katalysatoren können wahlweise als 2- bis 4-mm-Stränge oder als Tabletten mit 3 bis 5 mm Durchmesser oder als Splitt mit Teilchengrößen von 0,1 bis 0,5 mm oder als Wirbelkontakt eingesetzt werden. Andere Formkörper sind ebenfalls möglich.

Die Umwandlungen an diesen Katalysatoren werden in der Regel bevorzugt in der Gasphase bei 100 bis 450°C insbesondere 150 bis 350°C, vorzugsweise bei 200 bis 300°C und einer Belastung WHSV = 0,1 bis 20 h⁻¹, bevorzugt 0,5 bis 5 h⁻¹ (g Ausgangsgemisch/g Katalysator und Stunde) in einem Festbett oder auch im Wirbelbett ausgeführt.

Es ist auch möglich, die Reaktion in der Flüssigphase (Suspension-, Riesel- oder Sumpffahrweise) bei Temperaturen zwischen 0 und 250°C, bevorzugt zwischen 50 und 150°C durchzuführen.

Das Verfahren wird in der Regel bei Normaldruck oder je nach Flüchtigkeit der Ausgangsverbindung bei vermindertem oder erhöhtem Druck durchgeführt, wobei die Durchführung vorzugsweise kontinuierlich, aber auch diskontinuierlich erfolgen kann.

Schwerflüchtige oder feste Ausgangsstoffe werden in gelöster Form z.B. in THF-, Toluol- oder Petrolether-Lösung zum Einsatz gebracht. Generell ist eine Verdünnung des Eduktes mit derartigen Lösungsmitteln oder mit Inertgasen wie N₂, Ar, H₂O-Dampf möglich.

Nach der Umsetzung werden die entstandenen Produkte durch übliche Verfahren, z.B. durch Destillation, aus dem Reaktionsgemisch isoliert; nichtumgesetzte Ausgangsstoffe werden gegebenenfalls in die Umsetzung zurückgeführt.

Vorzugsweise werden die gasförmigen Reaktionsprodukte sofort in eine Trennung eingebracht und z.B. in einer Fraktionierkolonne in ihre Einzelkomponenten zerlegt, um eine Rückreaktion zu unterbinden und um einen hohen Umsatz zu erzielen.

Die nach dem erfindungsgemäßen Verfahren hergestellten Titanate des Silicium, Germanium, Cer oder Aluminium lassen sich als Heterogenkatalysatoren verwenden für nukleophile und elektrophile Substitutionen, für Addition- und Eliminierungsreaktionen, für Doppelbindungs- und Skelettisomerisierungen einschließlich Umlagerungen und für Redoxreaktionen z.B. für Alkylierungen, Isomerisierungen, Disproportionierungen, Acylierungen, Cyclisierungen, Hydratisierungen, Dehydratisierungen, Aminierungen, Hydrierungen, Dehydrierungen, Dehydrocyclisierungen, Hydroxylierungen, Oxidationen, Epoxidierungen, Skelettisomerisierungen sowie Kombinationen dieser Reaktionen, zur gezielten Umsetzung organischer Moleküle. Die erfindinngsgemäßen Katalysatoren können in der sauren, basischen oder Redoxkatalyse einsetzen.

Umsetzungen dieser Art sind beispielsweise in W. Hölderich, "Zeolites: Catalysis for the synthesis of organic compounds", Stud. Surf. Sci, Catal., Vol. 49, (1989) 69 bis 93 oder W. Hölderich und H. van Bekkum, "Zeolites in organic syntheses" Elsevier, Stud. Surf. Sci. Catal. Vol. 58 (1991) 631 bis 727 beschrieben. Insbesondere lassen sich Oxidationsreaktionen mit H₂O₂ oder organischen Peroxiden wie tert-Butylperoxid, Persäuren oder mit Sauerstoff in der Flüssigphase oder in der Gasphase durchführen. Solche Oxidationsreaktionen beinhalten:
- Olefine zu Oxiranen
- Alkane zu Alkoholen
- Aromaten zu Hydroxyaromaten
- Alkohole zu Aldehyden
- Sekundäre Alkohole zu Ketonen.

Auch Ammonoxidationen lassen sich mit den erfindinngsgemäßen Titankatalysatoren durchführen, z.B.
- die Umwandlung von Imin wie Cyclohexanonimin zu Oxim in Gegenwart von Sauerstoff
- die Umwandlung von Ketonen wie Cyclohexanon zu Oximen wie Cyclo-hexanonoxim in Gegenwart von H₂O₂ oder organischen Peroxiden und NH₃
- Toluol und NH₃/H₂O₂ oder NH₃/O₂ zu Benzonitril.

Besonders vorteilhaft lassen sich mit den erfindinngsgemäßen Titanaten als Heterogenkatalysatoren Dehydratisierungsreaktionen ausführen. Beispiele sind:
- Veresterungen, Carbonsäuren und Alkohole, z.B. Phthalsäureanhydrid und höherer Alkohol in der Flüssigphase
- Verätherungen aus Alkoholen
- Cyclisierungen von Diolen, z.B. 1,4-Butandiol zu THF.

Desweiteren lassen sich in Isomerisierungsreaktionen sowohl Doppelbindungs- als auch Skelettisomerisierungen mit den erfindungsgemäßen Titanaten als Heterogenkatalysatoren durchführen. Hierzu gehören:
- Epoxidumlagerung, d. h. Umwandlung eines Epoxides zu einem Aldehydoder Keton, z.B. Styroloxid und seine Derivate zu den entsprechenden Phenylacetaldehyden.
- Beckmann-Umlagerung z.B. von Cyclohexanonoxim zu
- Caprolactam

Weiterhin lassen sich sowohl die sauer als auch die basisch katalysierte Aldolkondensation mit dem erfindinngsgemäßen Titanatkatalysatoren durchführen. Beispiele sind:
- Aceton zu Mesityloxid
- Butyraldehyd zu 2-Ethylhexanal
- Acrolein, Formaldehyd und NH₃ zu Pyridin und β-Picolin

Die erfindinngsgemäßen Titanate können auch als Trägermaterialien für katalytisch aktive Komponenten wie Metalle durch Aufbringen über Imprägnierung oder Ionenaustausch wie zuvor erwähnt eingesetzt werden, z.B. für Edelmetalle in Hydrier- und Oxidations-reaktionen.

Neben den katalytischen Eigenschaften besitzen die erfindinngsgemäßen Titanate auch Adsorptions- und Ionenaustauschkapazität. Sie werden dabei wie bei den Katalysatoren sowohl als Formkörper oder auch als Pulver zum Einsatz kommen.

Die erfindinngsgemäßen Materialien können ebenso Verwendung finden als Adsorbentien für organische und anorganische Verbindungen. Bei Messungen mit Stickstoff und einer Temperatur von 77 K werden an den erfindungsgemäß hergestellten Titanaten spezifische Oberflächen von 40 bis 240 m²/g gefunden; die Isothermenform ist nach der BDDT-Klassifizierung als Typ II bis IV einzustufen.

### Beispiele

### Beispiel 1

In einen 250 ml fassenden und mit Teflon ausgekleideten Stahlautoklaven legt man eine Lösung aus 10,7 g Kaliumhydroxid in 52,0 g deionisiertem Wasser vor. In diese Lösung tropft man unter Rühren langsam 58,4 g Tetraethylorthotitanat zu. Zu der sich bildenden milchigen Suspension fügt man 28,8 g kolloidales Silica (Ludox AS40, DuPont). Anschließend homogenisiert man für die Dauer von zehn Minuten und erhitzt danach eine Stunde auf 100°C um den durch die Hydrolyse sich bildenden Alkohol abzudestillieren. Der auftretende Gewichtsverlust des Ansatzes wird mit Wasser ausgeglichen und der Autoklavenbecher druckdicht verschlossen.

Die Kristallisation erfolgt für die Dauer von 66 Stunden bei einer Temperatur von 200°C. Nach dem Erkalten wird der weiße Bodensatz von der überstehenden klaren Lösung abfiltriert und mehrfach mit Wasser neutralgewaschen. Das Produkt wird für 24 Stunden bei 110°C getrocknet und ergibt eine Ausbeute von 36,8 g Feststoff und zeigt das in Anspruch 3 genannte Röntgendiffraktogramm.

### Beispiel 2

In einen 250 ml fassenden und mit Teflon ausgekleideten Stahlautoklaven legt man eine Lösung aus 7,78 g Kaliumhydroxid in 38,0 g deionisiertem Wasser vor. In diese Lösung tropft man unter Rühren langsam 42,2 g Tetraethylorthotitanat zu. Zu der sich bildenden milchigen Suspension fügt man 20,8 g kolloidales Silica (Ludox AS40, DuPont) und 41,8 g Tetrapropylammoniumbromid. Anschließend homogenisiert man für die Dauer von zehn Minuten und erhitzt danach eine Stunde auf 100°C um den durch die Hydrolyse sich bildenden Alkohol abzudestillieren. Der auftretende Gewichtsverlust des Ansatzes wird mit Wasser ausgeglichen und der Autoklavenbecher druckdicht verschlossen.

Die Kristallisation erfolgt für die Dauer von 66 Stunden bei einer Temperatur von 200°C. Nach dem Erkalten wird der weiße Bodensatz von der überstehenden klaren Lösung (pH-Wert: 8 bis 9) abfiltriert und mehrfach mit Wasser neutralgewaschen. Das Produkt wird für 24 Stunden bei 110°C getrocknet und zeigt danach das in Anspruch 3 genannte Röntgendiffraktogramm. Die Feststoffausbeute an Silicotitanat BST-2 beträgt 25,3 g und eine chemische Analyse ergibt eine molares Verhältnis von Si/Ti=0,7.

In einem Glasdruckbehälter werden 3,3 g des hergestellten BST-2 mit 10,5 g Cyclohexanon, 23,4 g wäßriger Ammoniaklösung (25 Gew.-%) in 23,4 g tert.-Butanol als Lösungsmittel homogenisiert. Die Temperatur wird auf 80°C angehoben und nach Erreichen setzt man innerhalb von 15 Minuten 18 ml einer Wasserstoffperoxidlösung (30 Gew.-%) zu. Die einsetzende Reaktion führt man für die Dauer von 5 Stunden fort. Der erkaltete Reaktionsaustrag wird mit Toluol ausgeschüttelt und die organische Phase abgetrennt und gaschromatographisch analysiert.

Es wird gefunden, daß bei einem Umsatz an Cylohexanon von 85,5 % mit einer Selektivität von 90,2 % das Zielprodukt Cyclohexanonoxim gebildet wurde.

### Beispiel 3

In einem Polypropylenkolben werden 29,9 g Cäsiumhydroxid in 96,5 g deionisiertem Wasser gelöst. Zu dieser Lösung gibt man 72,6 g Aluminiumtriisopropylat. In einem 500 ml-Dreihalskolben legt man eine zweite Lösung aus 40,3 g Tetrapropylammoniumbromid in 95,5 g Wasser vor und versetzt tropfenweise mit 50,6 g Tetraisopropylorthotitanat. Die beiden Lösungen werden vereint und für die Dauer von einer Stunde homogenisiert. Das Reaktionsgel wird auf 85°C erhitzt um die alkoholische Phase abzudestillieren.

Die erkaltete Suspension wird bei 180°C für die Dauer von 168 Stunden in einem 250ml-Autoklav zur Kristallisation gebracht. Das erkaltete Reaktionsprodukt wird abfiltriert, mit Wasser mehrfach neutralgewaschen und abschließend bei 110°C innerhalb von 24 Stunden getrocknet.

Die Feststoffausbeute an Alumotitanat BAT-1 beträgt 40,8 g und das Produkt zeigt das in Anspruch 6 genannte Röntgendiffraktogramm.

### Beispiel 4

In einen 250 ml fassenden und mit Teflon ausgekleideten Stahlautoklaven legt man eine Lösung aus 10,7 g Kaliumhydroxid in 52,0 g deionisiertem Wasser vor. In diese Lösung tropft man unter Rühren langsam 58,4 g Tetraethylorthotitanat zu. Zu der sich bildenden milchigen Suspension fügt man 21,4 g Germanium-IV-oxid und homogenisiert für die Dauer von 10 bis 30 Minuten. Anschließend erhitzt man eine Stunde auf 100°C um den durch die Hydrolyse gebildeten Alkohol abzudestillieren. Der auftretende Gewichtsverlust des Ansatzes wird mit Wasser ausgeglichen und der Autoklavenbecher druckdicht verschlossen.

Die Kristallisation erfolgt für die Dauer von 168 Stunden bei einer Temperatur von 185°C. Nach dem Erkalten wird der weiße Bodensatz von der überstehenden klaren Lösung abfiltriert und mehrfach mit Wasser neutralgewaschen. Das Produkt wird für 24 Stunden bei 110°C getrocknet (Feststoffausbeute an Germanotitanat BGT-1 31,8 g) und zeigt danach das in Anspruch 4 genannte Röntgendiffraktogramm.

### Beispiel 5

In einen 250 ml fassenden und mit Teflon ausgekleideten Stahlautoklaven legt man eine Lösung aus 7,34 g Kaliumhydroxid in 50,0 g deionisiertem Wasser vor. In diese Lösung tropft man unter Rühren langsam 49,7 g Tetraethylorthotitanat zu. Zu der sich bildenden milchigen Suspension fügt man 18,8 g Ceroxid hinzu. Anschließend homogenisiert manfür die Dauer von zehn Minuten und erhitzt danach eine Stunde auf 100°C um den durch die Hydrolyse sich bildenden Alkohol abzudestillieren. Der auftretende Gewichtsverlust des Ansatzes wird mit Wasser ausgeglichen und der Autoklavenbecher druckdicht verschlossen.

Die Kristallisation erfolgt für die Dauer von 48 Stunden bei einer Temperatur von 200°C. Nach dem Erkalten wird der Bodensatz von der überstehenden klaren Lösung abfiltriert und mehrfach mit Wasser neutralgewaschen. Das Produkt wird für 24 Stunden bei 110°C getrocknet und zeigt danach das in Anspruch 5 genannte Röntgendiffraktogramm.

Die Feststoffausbeute an Certitanat BCT-1 beträgt 38,9 g.

## Patentansprüche

1. Kristalline Oxide des Titans der allgemeinen Formel I
[Tiₓ(m*D₁₋ₓ)(2n/3*E₁₋ₓ)]O₂ (I)
, in der D für Silicium oder Germanium, E für Cer oder Aluminium und x für 0,06 bis 0,9 steht und m = 1, wenn n = 0 oder m = 0, wenn n = 1 ist, mit der Maßgabe, daß die Oxide,
in denen D für Silicium steht, mindestens die folgenden Linien im Röntgendiffraktogramm aufweisen:
| 2 Theta | d [Å] | Relative Intensität |
|---|---|---|
| 10,8 | 8,18 | 75 bis 100% |
| 28,3 | 3,15 | 70 bis 90% |
| 47,8 | 1,90 | 40 bis 75% |
in denen D für Germanium steht, mindestens die folgenden Linien im Röntgendiffraktogramm aufweisen:
| 2 Theta | d [Å] | Relative Intensität |
|---|---|---|
| 11,39 | 7,756 | 100 bis 90 % |
| 19,80 | 4,478 | 20 bis 30 % |
| 22,91 | 3,878 | 20 bis 30 % |
| 28,16 | 3,165 | 40 bis 60 % |
| 36,62 | 2,451 | 20 bis 30 % |
in denen E für Cer steht, mindestens die folgenden Linien im Röntgendiffraktogramm aufweisen:
| 2 Theta | d [Å] | Relative Intensität |
|---|---|---|
| 11,1 | 7,96 | 15 bis 40 % |
| 24,1 | 3,68 | 15 bis 40 % |
| 28,5 | 3,12 | 80 bis 100 % |
| 33,0 | 2,71 | 40 bis 70 % |
| 43,1 | 2,09 | 15 bis 30 % |
| 47,4 | 1,91 | 80 bis 100 % |
in denen E für Aluminium steht, mindestens die folgenden Linien im Röntgendiffraktogramm aufweisen:
| 2 Theta | d [Å] | Relative Intensität |
|---|---|---|
| 9,92 | 8,90 | 5 bis 10 % |
| 14,37 | 6,15 | 40 bis 60 % |
| 19,41 | 4,56 | 15 bis 30 % |
| 28,09 | 3,17 | 100 bis 80% |
| 39,88 | 2,25 | 10 bis 20 % |

2. Kristalline Oxide des Titans I nach Anspruch 1, dadurch gekennzeichnet, daß man sie hydrothermal herstellt.

3. Kristalline Oxide des Titans I nach Anspruch 1 hergestellt durch hydrothermale Umsetzung und Kristallisation von Titanalkoholaten (RO)₄-Ti, in der R C₁- bis C₂₀-Alkyl bedeutet, und Silicium-, Germanium-, Cer- oder Aluminiumverbindungen in wässrigem Medium bei Temperaturen von 50 bis 300°C und Drükken von 1 bis 50 bar, gegebenenfalls in Gegenwart von Aminen oder organischen Ammoniumsalzen, Isolierung, Trocknung bei 100 bis 160°C und Calcinierung bei 450 bis 550°C, wobei die kristallinen Oxide anschließend mit einem Bindemittel aus SiO₂, Al₂O₃ oder deren Gemischen, TiO₂, ZrO₂ sowie Ton vermischt, danach verformt, getrocknet und calciniert werden.

4. Verwendung der kristallinen Oxide des Titans I nach Anspruch 1 als Katalysatoren oder Katalysatorträger bei der Umsetzung organischer kohlenwasserstoffhaltiger Verbindungen.

## Claims

1. A crystalline oxide of titanium of the formula I
[Tiₓ(m*D₁₋ₓ)(2n/3*E₁₋ₓ)]O₂ (I)
, where D is silicon or germanium, E is cerium or aluminum and x is from 0.06 to 0.9 and m is 1 when n is 0 or m is 0 when n is 1, with the proviso that the oxide
in which D is silicon has at least the following lines in the X-ray diffraction pattern:
| 2 Theta | d [Å] | Relative intensity |
|---|---|---|
| 10.8 | 8.18 | 75 to 100% |
| 28.3 | 3.15 | 70 to 90% |
| 47.8 | 1.90 | 40 to 75% |
in which D is germanium has at least the following lines in the X-ray diffraction pattern:
| 2 Theta | d [Å] | Relative intensity |
|---|---|---|
| 11.39 | 7.756 | 100 to 90 % |
| 19.80 | 4.478 | 20 to 30 % |
| 22.91 | 3.878 | 20 to 30 % |
| 28.16 | 3.165 | 40 to 60 % |
| 36.62 | 2.451 | 20 to 30 % |
in which E is cerium has at least the following lines in the X-ray diffraction pattern:
| 2 Theta | d [Å] | Relative intensity |
|---|---|---|
| 11.1 | 7.96 | 15 to 40 % |
| 24.1 | 3.68 | 15 to 40 % |
| 28.5 | 3.12 | 80 to 100% |
| 33.0 | 2.71 | 40 to 70 % |
| 43.1 | 2.09 | 15 to 30 % |
| 47.4 | 1.91 | 80 to 100 % |
in which E is aluminum has at least the following lines in the X-ray diffraction pattern:
| 2 Theta | d [Å] | Relative intensity |
|---|---|---|
| 9.92 | 8.90 | 5 to 10 % |
| 14.37 | 6.15 | 40 to 60 % |
| 19.41 | 4.56 | 15 to 30 % |
| 28.09 | 3.17 | 100 to 80 % |
| 39.88 | 2.25 | 10 to 20 % |

2. A crystalline oxide of titanium I as claimed in claim 1, which is prepared hydrothermally.

3. A crystalline oxide of titanium I as claimed in claim 1, prepared by hydrothermal reaction and crystallization of a titanium alcoholate (RO)₄-Ti, where R is C₁-C₂₀-alkyl, and a silicon, germanium, cerium or aluminum compound in an aqueous medium at from 50 to 300°C and from 1 to 50 bar, in the presence or absence of amines or organic ammonium salts, isolation, drying at from 100 to 160°C and calcination at from 450 to 550°C, the crystalline oxide subsequently being mixed with a binder consisting of SiO₂, Al₂O₃ or a mixture thereof, TiO₂, ZrO₂ and also clay, then being shaped, dried and calcined.

4. Use of a crystalline oxide of titanium I as claimed in claim 1 as catalyst or catalyst carrier in the conversion of organic hydrocarbon-containing compounds.

## Revendications

1. Oxydes cristallins du titane de la formule générale I :
[Tiₓ(m*D₁₋ₓ)(2n/3*E₁₋ₓ)]O₂ (I)
dans laquelle D représente du silicium ou du germanium, E représente du cérium ou de l'aluminium et x a une valeur de 0,06 à 0,9 et m = 1, lorsque n = 0, ou m = 0, lorsque n = 1, à la condition que les oxydes, dans lesquels D représente du silicium, présentent au moins les lignes suivantes dans le diffractogramme aux rayons X :
| 2 Thêta | d[Å] | Intensité relative |
|---|---|---|
| 10,8 | 8,18 | 75 à 100% |
| 28,3 | 3,15 | 70 à 90% |
| 47,8 | 1,90 | 40 à 75% |
que ceux dans lesquels D représente du germanium, présentent au moins les lignes suivantes dans le diffractogramme aux rayons X :
| 2 Thêta | d [Å] | Intensité relative |
|---|---|---|
| 11,39 | 7,756 | 100 à 90% |
| 19,80 | 4,478 | 20 à 30% |
| 22,91 | 3,878 | 20 à 30% |
| 28,16 | 3,165 | 40 à 60% |
| 36,62 | 2,451 | 20 à 30% |
que ceux dans lesquels E représente du cérium, présentent au moins les lignes suivantes dans le diffractogramme aux rayons X:
| 2 Thêta | d [Å] | Intensité relative |
|---|---|---|
| 11,1 | 7,96 | 15 à 40% |
| 24,1 | 3,68 | 15 à 40% |
| 28,5 | 3,12 | 80 à 100% |
| 33,0 | 2,71 | 40 à 70% |
| 43,1 | 2,09 | 15 à 30% |
| 47,4 | 1,91 | 80 à 100% |
et que ceux dans lesquels E représente de l'aluminium, présentent au moins les lignes suivantes dans le diffractogramme aux rayons X :
| 2 Thêta | d [Å] | Intensité relative |
|---|---|---|
| 9,92 | 8,90 | 5 à 10% |
| 14,37 | 6,15 | 40 à 60% |
| 19,41 | 4,56 | 15 à 30% |
| 28,09 | 3,17 | 100 à 80% |
| 39,88 | 2,25 | 10 à 20% |

2. Oxydes cristallins du titane I suivant la revendication 1, caractérisés en ce qu'on les prépare par voie hydrothermale.

3. Oxydes cristallins du titane I suivant la revendication 1, préparés par réaction hydrothermale et cristallisation d'alcoolates de titane (RO)₄-Ti, où R représente un alkyle en C₁-C₂₀, et de composés du silicium, du germanium, du cérium ou de l'aluminium, en milieu aqueux, à des températures de 50 à 300°C et sous des pressions de 1 à 50 bars, éventuellement en présence d'amines ou de sels d'ammonium organiques, isolement, séchage à 100 jusqu'à 160°C et calcination à 450 jusqu'à 550°C, les oxydes cristallins étant ensuite mélangés à un liant à base de SiO₂, d'Al₂O₃ ou de leurs mélanges, de TiO₂, de ZrO₂ ainsi que d'argile, ensuite déformés, séchés et calcinés.

4. Utilisation des oxydes cristallins du titane I suivant la revendication 1, comme catalyseurs ou supports de catalyseur dans la réaction de composés organiques contenant des hydrocarbures.
